# FASCICULE DE BREVET EUROPEEN

(11) **EP 0 434 573 B1**
(45) Date de publication et mention de la délivrance du brevet: **11.05.1994**
(21) Numéro de dépôt: 90420487.2
(22) Date de dépôt: 13.11.1990
(51) Int. Cl.: A01D 46/28

(54) **Dispositif permettant de réaliser automatiquement la récolte de fruits ou baies sur des plants disposés en lignes, tels que notamment les opérations de vendange du raisin**
Vorrichtung für die automatische Ernte von Früchten oder Beeren bei Reihenpflanzen, insbesondere bei der Traubenernte
Device for automatic harvesting of fruits or berries on row plants, especially for vintaging of grapes

(30) Priorité: 17.11.1989 FR 8915375
(43) Date de publication de la demande: 26.06.1991
(73) Titulaire: Germain, Pierre, F-69380 Lozanne (FR)
(72) Inventeur: Germain, Pierre, F-69380 Lozanne (FR)
(74) Mandataire: Laurent, Michel

(56) Documents cités:
- FR-A- 2 423 133
- FR-A- 2 511 837

## Description

La présente invention a trait à un dispositif perfectionné permettant de réaliser automatiquement le ramassage ou récolte de fruits ou de baies cultivés sur des plants disposés en lignes, et plus particulièrement la récolte de raisin.

Dans la suite de la description, l'invention sera décrite pour une opération de vendange de vignes, mais il est évident que le dispositif selon l'invention n'est pas limité à une telle application et qu'il pourrait être utilisé dans tout autre domaine où se posent des problèmes similaires.

Pour effectuer la récolte du raisin, il a été proposé depuis fort longtemps de remplacer les opérations de vendange faites manuellement par des dispositifs permettant un ramassage automatique, de tels dispositifs étant montés soit sur des machines automotrices, soit sur le châssis d'un tracteur enjambeur passant au-dessus de la rangée de vignes à traiter ou sur toute autre machine existante.

Outre des solutions qui permettent pratiquement de réaliser le pressage du raisin dès son prélèvement sur la vigne ainsi que cela ressort du FR-A-2 423 133, deux principaux types de machines sont plus particulièrement utilisés lorsque l'on souhaite effectuer la récolte des fruits en évitant, dans la mesure du possible, de les détériorer.

Les machines du premier type sont équipées de secoueurs en forme de "batons" (FR-A-2 605 487, FR-A-2 575 896 ou FR-A-2 511 837), animés d'un mouvement de va-et-vient transversal (ou équivalent) qui donnent une très bonne efficacité de décrochement. Ces secoueurs enserrent la zone fructifère et lui donnent un mouvement horizontal sinusoïdal avec une fréquence et amplitude propres à détacher des raisins. Cependant, de telles machines présente un inconvénient majeur, à savoir qu'au cours de l'avancement, les secoueurs glissent le long de la végétation et des raisins et provoquent donc des dégats sur les sarments (casse, effeuilllage..) et surtout entraînent très souvent un éclatement des graines compte tenu du contact étroit entre les éléments actifs des secoueurs et les fruits. En conséquence, on récolte au mieux avec de telles machines entre 25 et 40 % de grappes entières avec des différences importantes suivant les cépages et les modes de conduite de la vigne.

Un autre type de machines comporte des moyens qui enserrent et font vibrer le tronc du cep de vigne. Dans ces machines, la végétation et les fruits se trouvent donc au-dessus des éléments secoueurs, ce qui permet d'éviter tout contact direct des éléments actifs avec les fruits. Cependant, ces dispositifs nécessitent des pieds très élevés, de manière à ne pas détruire les racines des ceps. Leur utilisation s'en trouve donc très limitée.

Or on a trouvé, et c'est ce qui fait l'objet de la présente invention, un dispositif perfectionné qui permet la récolte des raisins (ou de tout autre fruit) de manière efficace, qui ne blesse pas la végétation et n'éclate pas les raisins, et peut également être utilisé dans le cas de culture avec des pieds de faible hauteur.

D'une manière générale, l'invention concerne donc un dispositif perfectionné permettant la récolte de fruits ou de baies sur les cultures en lignes par décrochement de fruits sans les détériorer, et plus particulièrement les opérations de vendange de vignes, ledit dispositif étant soit équipé de ses propres moyens moteur soit susceptible d'être adapté sur le châssis d'un tracteur enjambeur conventionnel et comportant d'une manière comparable aux enseignements du FR-A-2 511 837 deux ensembles symétriques disposés sur un portique apte à passer au-dessus de la rangée de ceps de vigne ou tout autre arbre équivalent, de telle sorte que les deux ensembles exercent leur action de part et d'autre dudit plant, afin de provoquer un mouvement horizontal ayant une fréquence et une amplitude permettant de détacher les raisins ou autre fruits au cours de l'avance de la machine, les deux ensembles disposés de part et d'autre du portique support étant constitués de deux éléments circulaires ou roues, montés parallèlement en regard l'un de l'autre, et il se caractérise en ce que:
- les ensembles symétriques sont constitués de deux éléments circulaires aptes à être entraînés en rotation autour de leur axe support par simple contact avec le rang de vigne et qui sont montés sur un ensemble de type excentrique, de telle sorte que leur périphérie se déplace de part et d'autre du plan médian XX du portique;
- lesdits éléments circulaires étant disposés à deux niveaux légèrement différents présentant une certaine souplesse radiale ou rayon variable.

Avantageusement et en pratique, selon une forme de réalisation conforme à l'invention, les deux éléments circulaires se présentent sous la forme de roues montées libres en rotation sur un plateau rotatif formant excentrique, lesdites roues étant équipées sur leur périphérie d'un bandage élastique et/ou étant montées sur leur axe support par l'intermédiaire d'éléments de liaison permettant un déplacement radial.

Selon une forme de réalisation, chauque roue est montée de manière excentrée par rapport à un plateau rotatif autour d'un axe central d'entraînement, alors que selon une variante, chaque roue est montée concentrique autour dudit plateau rotatif par l'intermédiaire d'un roulement, ledit plateau rotatif étant alors lui-même monté de manière excentrée par rapport à son arbre d'entraînement.

Grâce à un tel mode de conception de machine, on obtient sur les ceps de vigne un secouage horizontal, latéral et longitudinal qui provoque le décrochement des raisins (ou de tout autre fruit) en imprimant à la rangée des ceps de vigne un mouvement de va-et-vient. Ce mouvement de va-et-vient peut être soit d'amplitude importante et lente, ce qui permet de décrocher des grappes entières de raisin, soit d'amplitude faible et rapide permettant de décrocher des grains sans rafle avec bien entendu la possibilité d'un réglage entre ces deux extrêmes.

Les éléments circulaires en forme de roue utilisés dans le dispositif conforme à l'invention se déroulant librement le long de la rangée de ceps de vigne, n'occasionnent pas de dégats sur la végétation.

A titre indicatif, il est possible avec un dispositif conforme à l'invention présentant une roue de chaque côté de la rangée, de faire varier l'amplitude de deux à trois centimètres à plus de vingt centimètres. La vitesse de rotation de l'excentrique déplaçant l'axe de rotation des roues sera réglée en fonction du résultat souhaité pour faire tomber les graines ou les grappes.

Le mouvement rotatif des plateaux formant excentriques de la machine conforme à l'invention présente pour avantage de pouvoir s'équilibrer facilement, ce qui supprime pratiquement toutes les vibrations synonymes de casse de matériel.

Par ailleurs, dans la forme de réalisation selon laquelle la roue libre est montée directement autour du plateau rotatif excentrique, on obtient un meilleur guidage et il est également plus facile de réaliser des ensembles comportant plusieurs paires de roues superposées.

L'invention et les avantages qu'elle apporte seront cependant mieux compris grâce aux exemples de réalisation donnés ci-après à titre indicatif mais non limitatif et qui sont illustrés par les schémas annexés dans lesquels:
- la figure 1 est une vue schématique en élévation de l'ensemble d'un dispositif conforme à l'invention, l'élément tracteur n'étant pas représenté ; sur cette figure, les éléments actifs d'un tel dispositif sont représentés dans leurs deux positions extrêmes, d'une part en traits pleins et d'autre part, en traits pointillés, cette représentation étant faite dans deux plans séparés pour être plus clair ;
- la figure 2 est une vue de dessus montrant la manière dont s'exerce l'action des éléments circulaires en forme de roue utilisés dans le dispositif conforme à l'invention ;
- la figure 3 est une vue de détail montrant la structure d'un élément actif (excentrique et roue) particulièrement adapté pour être mis en oeuvre sur une machine conforme à l'invention pour la vendange du raisin ;
- la figure 4 est une courbe montrant de manière schématique, vue de dessus, les mouvements des éléments actifs (excentriques et roues) sur la rangée de vignes ;
- la figure 5 illustre une variante du dispositif conforme à l'invention, dans laquelle l'élément circulaire en forme de roue est monté concentriquement autour d'un plateau excentrique.

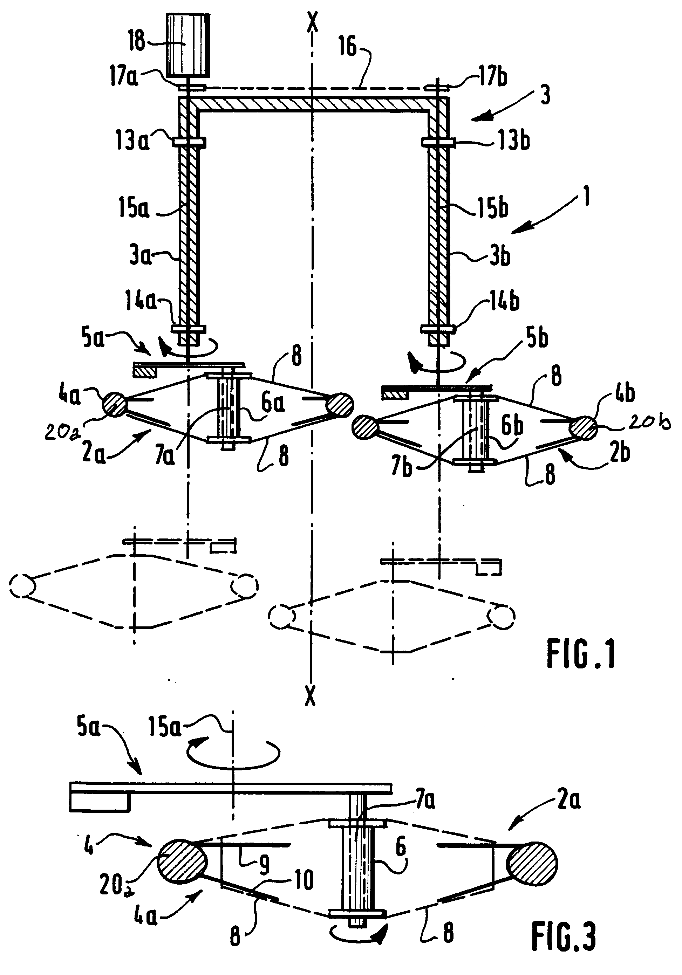

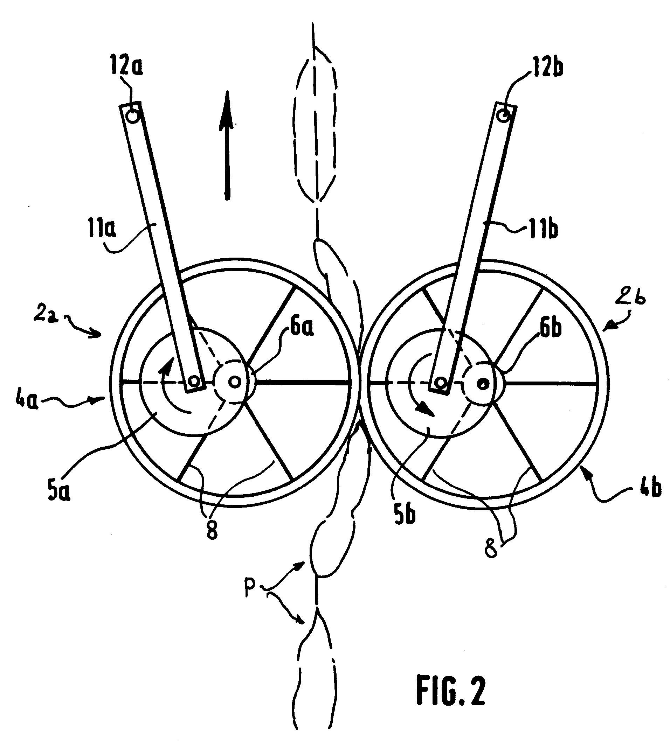

Si l'on se reporte aux schémas annexés et plus particulièrement aux figures 1 et 2, le dispositif selon l'invention se présente sous la forme d'un ensemble, désigné par la référence générale (1) et qui est destiné à être associé à un tracteur enjambeur traditionnel non représenté ni décrit par mesure de simplification. Un tel dispositif se compose essentiellement de deux ensembles symétriques, définis par les références générales (2a,2b) et qui sont disposés sur un portique (3) dont les dimensions sont telles qu'il puisse être déplacés au-dessus de la rangée de plants (ceps de vigne), sur laquelle on souhaite effectuer la récolte et ce, de telle sorte que les deux ensembles (2a,2b) exercent leur action de part et d'autre des plans (P) afin de provoquer un mouvement horizontal ayant une fréquence et une amplitude permettant de détacher les raisins au cours de l'avance de la machine. Evidemment, l'invention conforme à l'invention peut être autonome et montée sur tout autre type de machine existante qu'un tracteur enjambeur.

Les deux ensembles ou éléments actifs (2a,2b) sont montés aux extrémités inférieures des deux branches verticales (3a,3b) du portique (3) et sont constitués essentiellement de deux éléments circulaires ou roues (4a,4b) entraînés en rotation autour de leur axe support (7a,7b) par simple contact avec le rang de vigne et recevant un déplacement latéral par l'intermédiaire d'excentriques (5a,5b), de telle sorte que leurs surfaces périphériques se déplacent de part et d'autre du plan médian XX de la ligne de pieds (P) à traiter ; par ailleurs, les deux éléments circulaires (roues) (4a,4b) sont disposés à deux niveaux légèrement différents, leur espacement étant de l'ordre de quelques centimètres, ce qui permet d'éviter l'écrasement des raisins qui se trouvent entre ces roues.

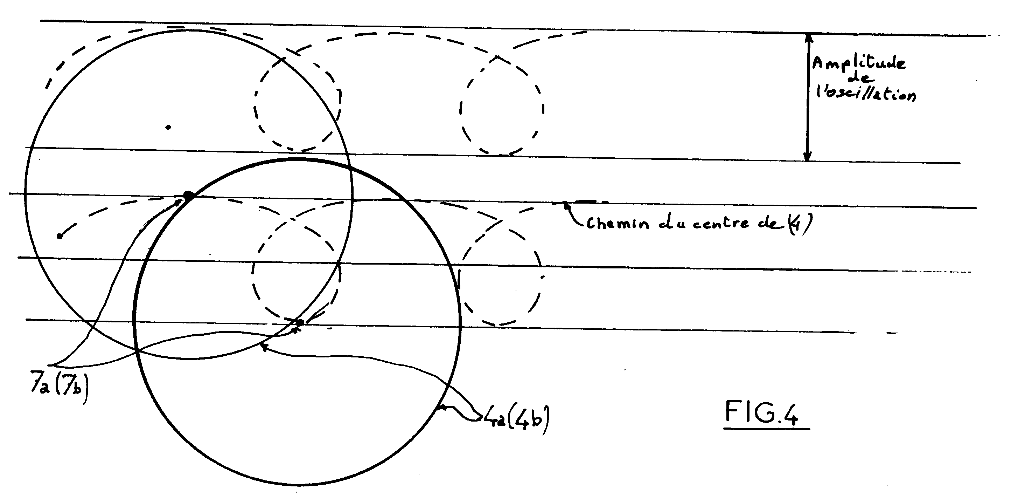

Par ailleurs, ainsi que cela ressort des schémas annexés et plus particulièrement des figures 1 et 3, les roues (4a,4b) sont montées sur les excentriques (5a,5b) en ayant une structure telle qu'elles puissent présenter une certaine souplesse radiale leur permettant d'avoir un rayon variable.

Dans le mode de réalisation illustré par les schémas annexés, les roues (4a) (ou 4b) sont reliées à un moyeu fou (6a,6b) monté sur un axe (7a) (ou 7b) par l'intermédiaire de tenseurs élastiques, désignés par la référence générale (8) (ou tout autre élément équivalent) qui permettent de positionner les roues (4a,4b) pour qu'elles travaillent horizontalement. Ces roues sont renforcées par deux flasques intérieurs (9,10), le flasque supérieur (9) étant plat, alors que le flasque inférieur (10) est, quant à lui, en forme d'entonnoir, ce qui permet de récupérer tous les fruits qui se trouvent au-dessus des roues et ainsi que d'orienter lesdits fruits directement dans le convoyeur de la machine de récolte. Un tel mode de réalisation permet de diminuer les risques de perte de fruits.

La structure et le fonctionnement d'une forme concrète de réalisation conforme à l'invention sont illustrés par les figures 1,2 et 3, la figure 4 étant une courbe montrant les déplacements des éléments actifs lors de leur action.

Un ensemble conforme à l'invention est associé au dispositif de relevage d'un tracteur enjambeur qui permet donc de régler le système horizontalement ainsi qu'à la hauteur de travail voulue.

Deux bras (11a,11b) (visibles uniquement à la figure 2) sont articulés sur un axe vertical (12a,12b) fixé sur le porte-outil du tracteur soutiennent le portique (3) sur lequel sont fixés les éléments actifs (2a,2b) constitués essentiellement de deux roues (4a,4b) et de deux plateaux circulaires (5a,5b) formant excentriques pour les axes (7a,7b) desdites roues (4a,4b). Les bras (11a,11b) étant articulés sur des axes verticaux (12a,12b) au niveau du tracteur et du portique, permettent un auto-alignement des organes de cueillette sur la rangée. Sur le portique (3), sont montés des paliers (13a,13b ; 14a, 14b) qui supportent deux axes (15a,15b) reliés entre eux par une chaine (16) venant s'engrener sur deux pignons (17a,17b). La liaison des deux axes verticaux (15a,15b) par l'intermédiaire d'une chaîne (16) permet de maintenir les deux éléments actifs (4a,4b) en phase pendant leur action.

Le mouvement de rotation des axes (15a,15b) est assuré par un moteur hydraulique (18) dont la vitesse de rotation est réglée au moyen d'un distributeur à débit variable.

A l'extrémité de chacun des axes (15a,15b), sont montés les éléments actifs proprement dits (2a,2b) et qui sont constitués de deux plateaux circulaires (5a,5b) destinés à former les excentriques entraînant les deux éléments circulaires (4a,4b) et ce, conformément à l'invention. Ces plateaux circulaires (5a,5b) sont percés de trous ou lumières (non visibles sur les schémas annexés) situés à des distances différentes par rapport au centre du plateau, ce qui permet de régler l'amplitude du mouvement de va-et-vient. Sur chaque plateau, on fixe les arbres (7a,7b) destinés à supporter les éléments circulaires (4a,4b), ce qui permet, en partant du mouvement rotatif des plateaux (5a,5b), d'obtenir un mouvement de va-et-vient. Sur chaque arbre excentré (7a,7b), sont montés les roues (4a,4b) qui réagissent sur les ceps et ce, par l'intermédiaire de moyeux fous (6a,6b), ce qui permet d'obtenir une rotation desdits éléments (4a,4b) lors de l'avance de la machine et au contact avec la végétation.

Dans la forme de réalisation illustrée, les éléments circulaires (4a,4b) sont constitués de deux roues reliées aux flasques des moyeux (6a,6b) par l'intermédiaire d'éléments tenseurs (caoutchouc) (8) qui assurent à la fois la tension et la souplesse du système.

La périphérie de la roue comportera un élément amortisseur, tel que par exemple un boudin en caoutchouc, un boudin en forme de "pneu" qui permet d'amortir les chocs, autorise une amplitude de déplacement plus grande et par là même évite de "blesser" la vigne.

Par ailleurs, les boudins périphériques (20a,20b) sont associés de préférence à deux flasques (9,10), le flasque supérieur (9) étant plan, alors que le flasque inférieur (10) présente une forme en entonnoir. Le flasque supérieur (9) plan évite aux fruits de tomber à côté de la roue, alors que le flasque inférieur (10) en forme d'entonnoir permet de guider les fruits récoltés vers le système de réception (convoyeur).

Grâce à un tel ensemble, en fonctionnement normal, on obtient donc un entraînement des roues (4a,4b) selon un cycle tel que leur périphérie se déplace alternativement de part et d'autre du plan XX de travail, les positions extrêmes étant représentées dans deux plans différents à la figure 1 d'une part, en traits pleins et, d'autre part, en traits pointillés.

Un tel déplacement des roues périphériques s'effectue selon la courbe illustrée par la figure 4.

Grâce à un tel ensemble, il est possible d'obtenir sur les ceps de vigne un secouage horizontal, latéral et longitudinal qui provoque le décrochement des raisins sans détériorer les grappes.

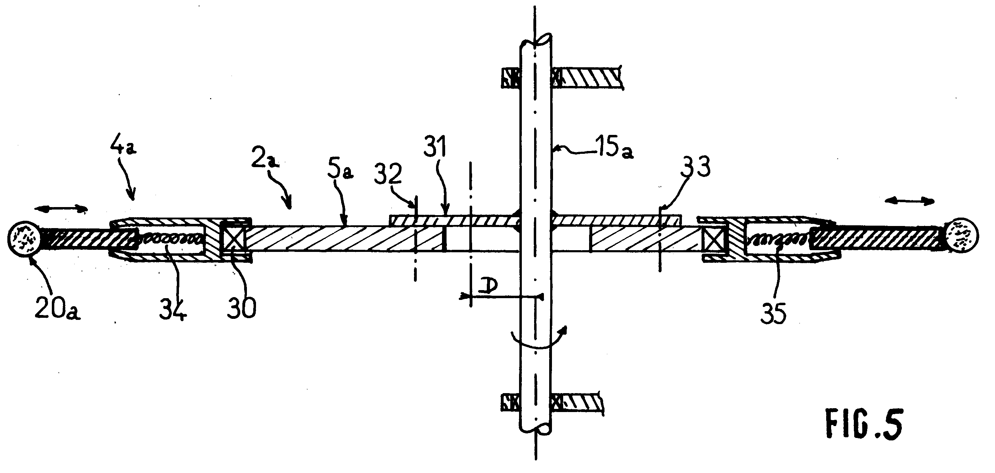

La figure 5 illustre une variante d'un dispositif conforme à l'invention, cette figure étant une vue en coupe schématique de l'un des éléments actifs (2a dans le cas présent).

Dans cette variante, où les mêmes références ont été utilisées pour désigner les éléments remplissant les mêmes fonctions que dans l'exemple décrit précédemment, la roue désignée par la référence (4a) et qui comporte également à sa périphérie un bandage élastique (20a), est montée de manière concentrique autour du plateau support (5a), et ce par l'intermédiaire d'un ensemble à roulement (30). Le plateau (5a) est, quant à lui, solidarisé de l'arbre moteur d'entraînement (15a), de manière à être excentré par rapport à l'axe de rotation de ce dernier. Le montage du plateau support (5a) est réalisé au moyen d'un flasque (31), la liaison étant réalisée au moyen d'éléments de blocage conventionnels (boulons), représentés uniquement par leurs axes (32,33). Il est possible dans cette forme de réalisation, de modifier la distance (D) entre l'axe de rotation proprement dit (15a) et l'axe du plateau rotatif (5a), de manière à modifier le déplacement latéral de l'ensemble. Comme précédemment, l'élément circulaire (4a) (roue libre), présente une certaine souplesse radiale obtenue au moyen de systèmes à ressorts ou similaires (34,35).

Un tel mode de réalisation présente par rapport à la solution décrite précédemment, l'avantage de pouvoir monter plus facilement plusieurs paires d'éléments actifs les uns en dessus des autres.

Bien entendu, l'invention n'est pas limitée a l'exemple de réalisation concret décrit précédemment, mais elle en couvre toutes les variantes réalisées dans le même esprit.

Ainsi, il pourrait être envisagé de remplacer les excentriques par d'autres systèmes permettant d'obtenir un mouvement de va-et-vient, par exemple des systèmes à bras de leviers ; de telles solutions présentent cependant comme inconvénient d'être moins performantes qu'un système à excentriques, compte tenu des risques de vibrations.

Il peut également être envisagé de régler l'espacement entre les deux roues (4a,4b) par adaptation de la largeur du portique.

On pourrait également supprimer les bras supports (11a,11b) et obtenir le même résultat en suspendant le portique (3) verticalement par un ensemble de biellettes.

De plus, selon la hauteur de la zone à traiter, comme dit précédemment, il peut être envisagé de monter en série, sur chaque axe vertical, plusieurs dispositifs rotatifs (4a,4b) ; dans un tel cas, notamment dans la forme de réalisation illustrée par les figures 1, 2 et 3, il peut être envisagé de remplacer les plateaux circulaires (5a,5b) formant excentriques par un villebrequin.

Un tel ensemble peut être utilisé non seulement pour la récolte des raisins, mais peut également être adapté pour toute récolte de petits fruits et baies cultivés en haies fruitières (framboises, cassis, groseilles..).

## Revendications

1. Dispositif permettant de réaliser automatiquement la récolte de fruits ou de baies sur les cultures en lignes par décrochement de fruits sans les détériorer, et plus particulièrement les opérations de vendange de vignes, ledit dispositif (1) étant soit équipé de ses propres moyens moteur soit susceptible d'être adapté sur le châssis d'un tracteur enjambeur conventionnel et comportant deux ensembles symétriques (2a,2b) disposés sur un portique (3) apte à passer au-dessus de la rangée de ceps de vigne ou tout autre arbre équivalent, de telle sorte que les deux ensembles (2a,2b) exercent leur action de part et d'autre dudit plant, afin de provoquer un mouvement horizontal ayant une fréquence et une amplitude permettant de détacher les raisins ou autre fruits au cours de l'avance de la machine, les deux ensembles (2a,2b) disposés de part et d'autre du portique support (3) étant constitués de deux éléments circulaires ou roues, montés parallèlement en regard l'un de l'autre, et il se caractérise en ce que:
- les ensembles symétriques sont constitués de deux éléments circulaires (4a,4b) aptes à être entraînés en rotation autour de leur axe support par simple contact avec le rang de vigne et qui sont montés sur un ensemble de type excentrique (5a,5b), de telle sorte que leur périphérie se déplace de part et d'autre du plan médian XX du portique;
- lesdits éléments circulaires (4a,4b) étant disposés à deux niveaux légèrement différents présentant une certaine souplesse radiale ou rayon variable.

2. Dispositif selon la revendication 1, caractérisé en ce que les deux éléments circulaires (4a,4b) se présentent sous la forme de roues montées libres en rotation sur un plateau rotatif (5a,5b) formant excentrique, lesdites roues étant équipées sur leur périphérie d'un bandage élastique et/ou étant montées sur leur axe support (7a,7b) par l'intermédiaire de bras de liaison (8), permettant un déplacement radial et donc un rayon variable.

3. Dispositif selon la revendication 2, caractérisé en ce que chaque élément circulaire ou roue (4a,4b), est monté de manière excentrée sur un plateau rotatif (5a,5b) entraîné par un axe central (15a,15b).

4. Dispositif selon la revendication 2, caractérisé en ce que chaque élément circulaire ou roue (4a,4b) est monté concentrique autour d'un plateau rotatif (5a,5b) par l'intermédiaire d'un roulement, lesdits plateaux rotatifs (5a,5b) étant alors montés de manière excentrée par rapport à leur arbre d'entraînement (15a,15b).

5. Dispositif selon l'une des revendications 1 à 4, caractérisé en ce que les roues (4a,4b) sont renforcées par deux flasques intérieurs (9,10), le flasque supérieur (9) étant plat, alors que le flasque inférieur (10) est quant à lui en forme d'entonnoir permettant d'orienter une majorité de la récolte directement à l'intérieur d'un convoyeur.

6. Dispositif selon l'une des revendications 1 à 5, caractérisé en ce que les plateaux circulaires (5a,5b) sont percés de trous ou lumières, situés à des distances différentes par rapport au centre, permettant de régler ainsi l'amplitude du mouvement de va-et-vient communiqué aux éléments circulaires (4a,4b).

## Patentansprüche

1. Vorrichtung, welche automatisch die Ernte von Früchten oder Beeren auf Pflanzenkulturen in Reihen durch Loslösen der Früchte ohne sie zu beschädigen ermöglicht, und welche insbesondere die Vorgänge der Weinlese von den Weinstöcken ermöglicht, wobei die genannte Vorrichtung (1) entweder mit eigenen Antriebsmitteln versehen ist oder an das Gestell eines herkömmlichen Stelzradschleppers anbringbar ist und zwei symmetrische Einheiten (2a,2b) aufweist, die auf einem brückenförmigen Rahmen (3) angeordnet sind, welcher oberhalb der Reihe von Weinreben oder allen anderen entsprechenden Bäumen entlang bewegbar ist, so daß die beiden Einheiten (2a,2b) ihre Wirkung von beiden Seiten der genannten Pflanze ausüben, um eine horizontale Bewegung zu bewirken, die eine Frequenz und eine Amplitude hat, welche das Loslösen der Trauben oder anderer Früchte während der Vorwärtsbewegung der Maschine ermöglichen, wobei die zwei auf beiden Seiten des brückenförmigen Rahmen (3) angeordneten Einheiten (2a,2b) aus zwei kreisförmigen Elementen oder Rädern gebildet sind, die parallel und einander gegenüber angebracht sind, und wobei die Vorrichtung dadurch gekennzeichnet ist, daß
- die symmetrischen Einheiten aus zwei kreisförmigen Elementen (4a,4b) gebildet sind, die durch einfachen Kontakt mit der Reihe von Weinreben in Drehung um ihre Tragachse versetzbar sind und die an einer exzenterartigen Einheit (5a,5b) angebracht sind, so daß ihr Umfang nach beiden Seiten bezüglich der Mittelebene XX des brückenförmigen Rahmens ausgelenkt wird;
- die genannten kreisförmigen Elemente (4a,4b) auf zwei geringfügig unterschiedlichen Höhen angeordnet sind und eine gewisse radiale Nachgiebigkeit oder einen variablen Radius aufweisen.

2. Vorrichtung nach Anspruch 1, dadurch gekennzeichnet, daß die beiden kreisförmigen Elemente (4a,4b) die Form von Rädern aufweisen, die frei drehbar an einer drehbaren Scheibe (5a,5b), die einen Exzenter bildet, angebracht sind, wobei die genannten Räder an ihrem Umfang mit einem elastischen Reifen versehen sind und/oder an ihrer Tragachse (7a,7b) über einen Verbindungsarm (8) angebracht sind, welcher eine radiale Verschiebung und daher einen variablen Radius ermöglicht.

3. Vorrichtung nach Anspruch 2, dadurch gekennzeichnet, daß jedes kreisförmige Element oder Rad (4a,4b) in exzentrischer Weise an einer drehbaren, durch eine Mittelachse (15a,15b) angetriebenen Scheibe (5a,5b) angebracht ist.

4. Vorrichtung nach Anspruch 2, dadurch gekennzeichnet, daß jedes kreisförmige Element oder Rad (4a,4b) über ein Lager konzentrisch um eine drehbare Scheibe (5a,5b) herum angebracht ist, wobei die drehbaren Scheiben (5a,5b) ihrerseits exzentrisch an ihrer Antriebswelle (15a,15b) angebracht sind.

5. Vorrichtung nach einem der Ansprüche 1 bis 4, dadurch gekennzeichnet, daß die Räder (4a,4b) durch zwei innere Flansche (9,10) verstärkt sind, wobei der obere Flansch (9) flach ist, wogegen der untere Flansch (10) die Form eines Trichters aufweist, wodurch es ermöglicht wird, einen großen Teil der Ernte direkt in das Innere einer Fördervorrichtung zu leiten.

6. Vorrichtung nach einem der Ansprüche 1 bis 5, dadurch gekennzeichnet, daß die kreisförmigen Scheiben (5a,5b) von Löchern oder Schlitzen durchbrochen sind, die in unterschiedlichen Abständen von dem Mittelpunkt angeordnet sind und so das Einstellen der Amplitude der auf die kreisförmigen Elemente (4a,4b) übertragenen Vor- und Zurückbewegung ermöglichen.

## Claims

1. Device making it possible to harvest fruits or berries of crops in rows automatically by detaching the fruit without damaging it, and more particularly allowing the operations of vintaging vines, the said device (1) being either equipped by its own drive means or capable of being fitted to the chassis of a conventional straddle tractor and including two symmetrical assemblies (2a, 2b) arranged on a gantry (3) capable of passing over the row of vine stocks or any other equivalent tree, so that the two assemblies (2a, 2b) exert their action on either side of the said plant, so as to bring about a horizontal movement with a frequency and amplitude allowing the grapes or other fruits to be detached during the forward travel of the machine, the two assemblies (2a, 2b) arranged on either side of the support gantry (3) consisting of two circular elements or wheels mounted parallel and facing one another, and it is characterized in that:
- the symmetrical assemblies consist of two circular elements (4a, 4b) capable of being driven rotationally about their support spindle by simple contact with the vine row and which are mounted on an assembly (5a, 5b) of the eccentric type, so that their periphery moves on either side of the median plane XX of the gantry;
- the said circular elements (4a, 4b) being arranged at two slightly different levels having a certain radial flexibility or variable radius.

2. Device according to Claim 1, characterized in that the two circular elements (4a, 4b) are in the form of wheels mounted to rotate freely on a turntable (5a, 5b) forming an eccentric, the said wheels being equipped on their periphery with an elastic binding strip and/or being mounted on their support spindle (7a, 7b) through the use of linkage arms (8) allowing a radial displacement and therefore a variable radius.

3. Device according to Claim 2, characterized in that each circular element or wheel (4a, 4b) is mounted so that it is eccentric on a turntable (5a, 5b) driven by a central spindle (15a, 15b).

4. Device according to Claim 2, characterized in that each circular element or wheel (4a, 4b) is mounted so that it is concentric about a turntable (5a, 5b) through the use of a rolling contact bearing, the said turntables (5a, 5b) then being mounted so that they are eccentric with respect to their drive shaft (15a, 15b).

5. Device according to one of Claims 1 to 4, characterized in that the wheels (4a, 4b) are strengthened by two internal plates (9, 10), the upper plate (9) being flat while the lower plate (10) for its part is in the form of a funnel allowing a majority of the harvest to be orientated directly into a conveyor.

6. Device according to one of Claims 1 to 5, characterized in that the circular tables (5a, 5b) are pierced with holes or slots located at different distances with respect to the centre, thus making it possible to adjust the amplitude of the reciprocating movement imparted to the circular elements (4a, 4b).
